# EUROPEAN PATENT SPECIFICATION

(11) **EP 1 829 762 B1**
(45) Date of publication and mention of the grant of the patent: **13.07.2011**
(21) Application number: 05815014.5
(22) Date of filing: 10.11.2005
(51) Int. Cl.: B61D 3/16, B65D 88/52

(54) **TRANSPORT CONTAINER FOR BLADES**
TRANSPORTBEHÄLTER FÜR SCHAUFELN
CONTENEUR DESTINE AU TRANSPORT DE PALES

(30) Priority: 11.11.2004 ES 200402845
(43) Date of publication of application: 05.09.2007
(73) Proprietor: GAMESA INNOVATION AND TECHNOLOGY, S.L., 31013 Pamplona (ES)
(72) Inventor: LLORENTE GONZALEZ, Jose Ignacio, 48170 Zamudio (Bizkaia) (ES); VELEZ ORIA, Sergio, 48170 Zamudio (Bizkaia) (ES)
(86) International application number: PCT/ES2005/070155
(87) International publication number: WO 2006/053931

(56) References cited:
- ES-A1- 2 193 808
- GB-A- 2 257 123
- US-A1- 2003 175 089

## Description

### Subject of the invention.

The container for the transport of blades which is the subject of this invention has been designed considering the restrictions presented these days by land transport in the majority of countries both in terms of weight, size and road safety. A solution for the storage of the containers has also been taken into account, so that they occupy the least space possible when both empty and loaded, with consideration also of the quickest and safest method for assembling and disassembling the containers both on site and at the factory using minimum labour and mechanisms possible.

Finally, the possibilities for transporting said containers by maritime transport and for stacking them have been contemplated.

### Background of the invention.

An example of a known wind turbine container is patent WO 02/083523 which shows a transport method that incorporates two counter facing blades in such a way that located on each side is the tip of one blade and the base of the other, with both blades able to be situated in one same container, as although they are separate containers they can the joined to make one sole container. The ends of the container are formed by a frame which is reinforced on the corners with metal laminate parts. However, the container which is the subject of this invention optimises the interior space to enable three blades to be transported in each container. The blades are arranged so that the transverse axis is situated horizontally along the floor or slightly sloped in relation to the floor.

Another example of a known blade container is US 2003/0175089 the main characteristic of which is that said container is modular, which allows it to be extended in length in order to adapt it to the length of the blade to be transported. Each module is formed by a frame, the interior of which is covered with corrugated walls. There are connection mechanisms between the modules and an inner cradle formed by two trusses which support each of the blades. As in the previous case, the container includes two counter facing blades in its interior.

The proposed container vastly differs from the known containers and although it is re-usable, as they all are, it has the added characteristic that it can be folded and stacked in a minimum space and can be grouped 2 or 3 containers at a time for return transport.

### Description.

The container for the transport of blades is comprised of the following elements: walls, upper part and lower part. The walls are formed by tubular structured trusses in square sections crossed by one or two diagonal stays. The trusses of each wall are coupled at the bottom by a bolt with lock pin and at the top by a nut and screw. This coupling enables camber to be given to the structure, as the two coupled trusses turn in the bolt fixture at the bottom whilst on the upper part they can be separated enabling the thickness of the separating wedge to be varied to achieve flexibility in height. The walls of both sides of the container are joined together by the upper part using adjustable stays with screw ratchets and transversal spacers on the walls, so that both the stays and the spacers can be removed for loading and unloading the blades.

On the lower part of the container the tables that act as support in transport or storage of the blade are installed, the tables have stubs which fit into the holes arranged on the side walls. The closing elements of the container are comprised of two types of cover, the front cover has anchor points for two blades and the rear cover has an anchor point for one blade, the covers are coupled to the container walls by the same type of joint as the trusses, a bolt and screw, both front and rear covers have a hoisting lug in the centre.

The tables which provide support for transport and storage of the blades are of three different types, a rear table which serves as support for the extendable platform, another front table for coupling directly to the truck as this table has a King-pin assembled on it and finally, a central table which serves as a support to the container on the central supporting feet. The King-pin is a pivot assembled on the tie plate or fifth wheel of the tractor truck. When connecting the welded King-pin to a table, it is coupled directly to the tractor which therefore decreases the height in relation to other coupling mechanisms.

The design of the tables is such that they act as a guide for assembling the side walls of the container, in such a way that said tables are joined by the two stubs which fit into two the holes on the corresponding wall, they are then secured with a bolt and lock pin which facilitates the correct positioning of the walls as well as their alignment and the separation between them. All tables incorporate two retractable support feet, which are also telescopic with seven fixture points in order to adapt to the different terrain heights.

The support feet are secured using a bolt and lock pin. The support feet are positioned in the horizontal or retracted position with a bolt and lock pin also, and they are positioned in the vertical position with a stay which is fixed to the foot by a rotating stub and to the table with the same bolt which locks the horizontal foot position but by changing the bolt hole.

The stays which join the both sides of the walls at the top have two lugs with a stub welded on, each lug is placed at one end of the stay so that they can be fit into the holes on the side walls. On one end of the stay, welded to one of the lugs, there is an extendable ratchet, the other lug is welded to a circular section tube which in turn is welded to the other end of the ratchet. The spacers are arranged transversally across the sides of the walls.

The ratchet is an element comprised of two spindles, one left and another right, and a threaded bushing which contains a lever to vary the length and a spring trigger which sets the position reached by the lever. As we turn the lever by small rotations, the trigger does not allow it to return thanks to the pressure exercised on the spindle, therefore the operation of this element is similar to that of a torque wrench or ratchet wrench.

The container has the following anchor points: on one hand each table has two lugs for crane hoisting, and on the other, each of the walls and each of the covers has another lug.

### Brief Description of Figures

For a better understanding of that described in this report, figures are attached which show all of the elements which form the container for the transport of blades which is the subject of this invention, summarising briefly:
Figure 1 shows the joint between two elements of the trusses that form the walls of the container.
Figure 2 shows an adjustable stay with a screw ratchet of the type which is used for joining together the walls of both sides of the container.
Figure 3 shows one of the tables which acts as a support for the transport or storage of the containers and the telescopic support foot with seven locking positions.
Figures 4 and 5 show the two types of cover designed for transporting the blades.
Figure 6 shows the final arrangement of the blades inside the container.
Figures 7 and 8 shows the complete container once the assembly of the different elements is complete.

### Description of a preferred embodiment.

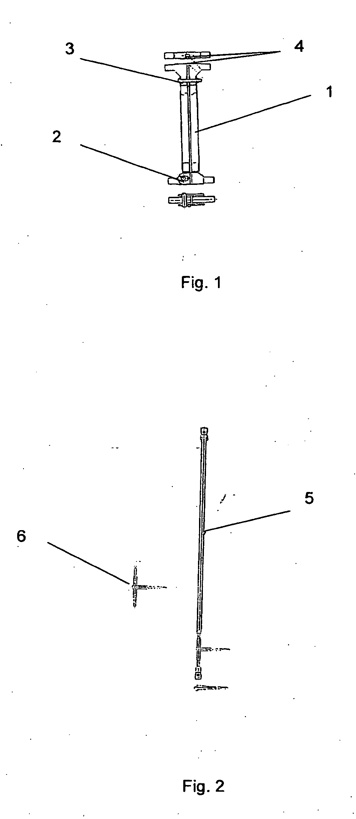

As shown in figure 1, the walls are formed by trusses (1) of a square tubular structure, structured in such a way that each of the side walls is formed by different trusses (1) joined together to form a side wall module.

The trusses (1) of a same wall are coupled together at the bottom using a bolt (2) with lock pin and at the top using a screw (3) which allows camber to be given to the structure, as the two coupled trusses (1) rotate in the bolt (2) fixed at the bottom and can be separated at the top allowing the thickness of the separators to be changed (4). The walls of both sides are joined together by the upper part using adjustable stays (5) with a screw ratchet (6) as shown in figure 2, in such a way that said adjustable stays (5) may be removed for loading and unloading the container.

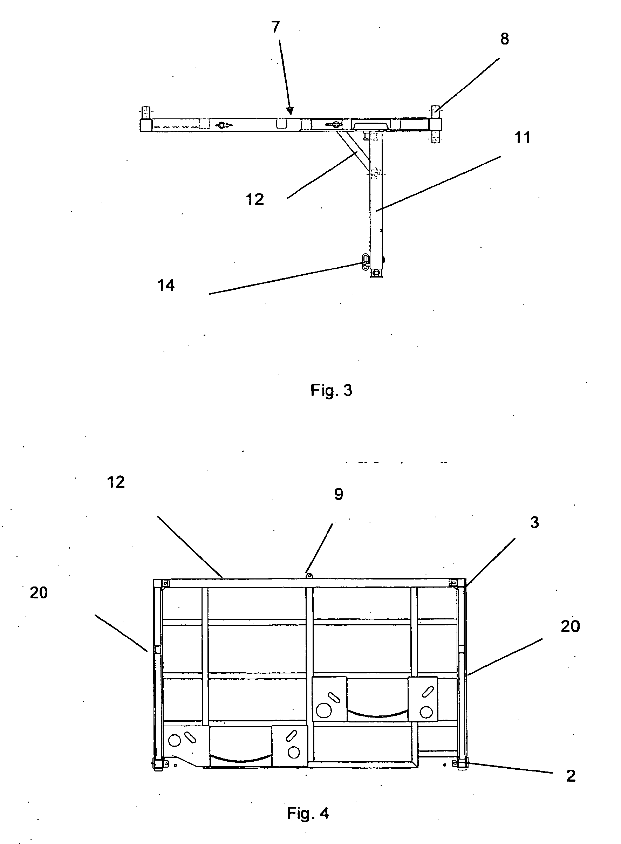

As shown in figure 3, on the lower part of the container the tables (7) are installed, which act as support in transport or storage and which have stubs (8) that fit into the holes arranged on the side walls. Three types of tables have been designed, a rear table (7c) which serves as support for the extendable platform, another front table (7a) for coupling directly to the truck which has the King-pin assembled on it and finally, a central table (7b) which serves as a support to the container on the central supporting feet (11). All of the tables (7) incorporate retractable support feet (11) which are also telescopic with seven locking points in order to adapt to the different terrain heights in the areas where the container is loaded - unloaded. The retractable support feet (11) have been designed so that they act as a guide for assembling the side walls and are fixed by two stubs which fit into holes on the corresponding walls and are locked using a bolt (14) and lock pin, this facilitates the positioning of the walls as well as their alignment and the spacing between them.

The support feet (11) of the table (7) are telescopic and have seven locking positions which are locked with a bolt and lock pin or an interlocking bolt (14). The support feet (11) are positioned in the horizontal or retracted position with a bolt and lock pin (14) and they are positioned in the vertical position with a stay (12) which is fixed to the support foot (11) by a rotating stub and to the table (7) with the same bolt (14) which locks the support foot (11) in the horizontal foot (11) position but by changing the bolt (14) hole.

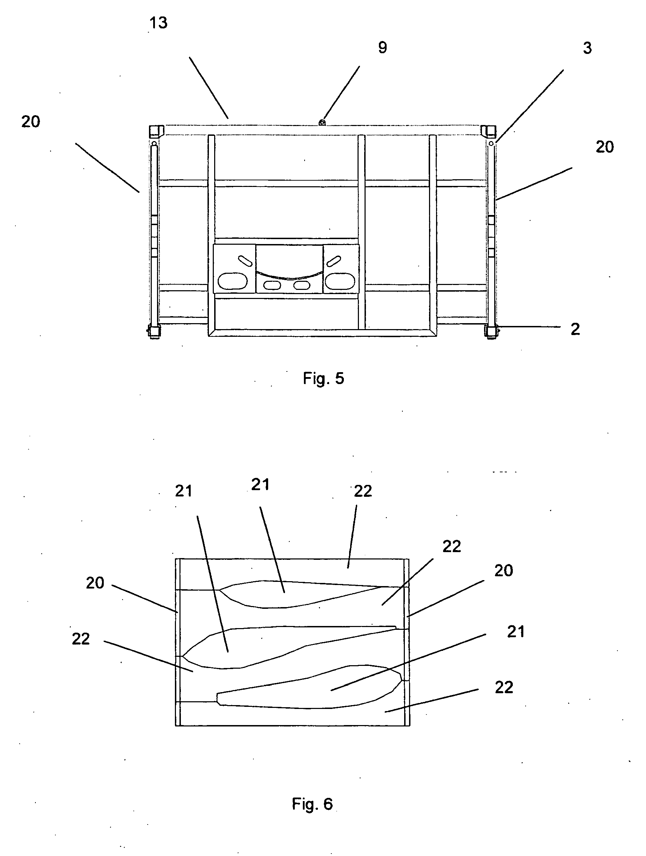

As shown in figures 4 and 5 two types of cover have been designed, one rear cover (12) which has anchor points for two blades, figure 4, and another front cover which has an anchor point for one blade (13), figure 5, so that the tractor units has the greatest traction possible provided that load limits for said unit are not exceeded. Both covers (12) and (13) are coupled to the walls of the container (20) with the same type of fixture, bolt (2) and screw (3) that the trusses have (1).

Once the blades (21) are in place inside the container, each blade root is fixed to the covers (12) and (13) with two screws and two plates. Said blades (21) are inserted into metal cavities (22) located in the centre of the container (central table 7b) which avoids any damage being suffered during transport, as shown in figure 6.

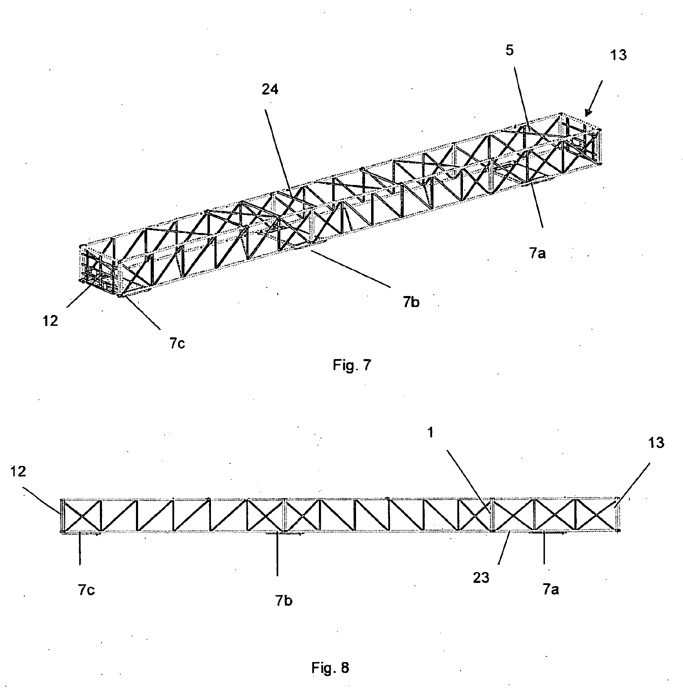

Finally, as shown in figures 7 and 8, to assemble the container, the three tables (7a, 7b and 7c) are firstly aligned and situated at the correct distance. The rear truss (1) is then lifted by a central hook (not shown in the figure) and it is inserted in the pivots of the corresponding table (7). The rear truss (1) of the other side is then inserted in the same way. The rear cover (12) is then positioned, which is the cover that has anchor points for two blades (21).

The next trusses are then assembled, the trusses with the intermediate section, which are hoisted by their central hook and aligned with the rear trusses. When this process is complete, the pivots of the second (7b) and third tables (7c) are inserted. At this point the adjustment bolts (2) of the lower part of the coupling between the trusses are put in place and the screw, nuts and counternuts (3) of the upper part are adjusted. The same process is followed with the front trusses (1)

The front cover (13), is then put in place in the same way as the rear cover (12), the front cover is that which has an anchor point for only one blade. Once the container is so assembled, the loading of the blades (21) and their respective intermediate supports (22) can take place.

Finally, the upper adjustable stays (5) and the lower stays are put in place along with the spacers (24) which complete the container assembly process.

## Claims

1. Container for the transport of blades comprised of side walls formed by trusses which elements have a tubular structure and squared sections, having the container support tables (7) installed in the lower part for the storages and later transport of blades, said support tables (7) incorporating support feet, and coupling both side walls using adjustable stays, **characterised in that** the container is formed by side walls (20), an upper and a lower part, and **in that** the trusses (1) of a same wall are coupled together using a bolt (2) with lock pin at the bottom and using a screw (3) at the top, with both coupled trusses (1) being able to turn in the bolt (2) fitting together at the bottom and being separated at the top therefore enabling the thickness of some separators (4), located between the trusses to be coupled, to be varied.

2. Container for the transport of blades, according to claim one, **characterised in that** the tables (7) that serve as a support and are installed at the bottom of the container and incorporate retractable support feet (11) which are also telescopic and which serve as a guide for the assembly of the side walls.

3. Container for the transport of blades, according to claim one, **characterised in that** the tables (7) are coupled to the container using stubs which fit into holes on the corresponding wall and which are locked with a bolt and lock pin or interlocking bolt (14).

4. Container for the transport of blades, according to claim one, **characterised in that** the containers are closed at the front and rear by a front cover (13) which has the necessary anchor points for one blade and another rear cover (12) which has the necessary anchor points for two blades, both covers (12) and (13) being coupled to the walls of the container (20) with the same type of coupling as the trusses (1), a bolt (2) and screw (3).

5. Container for the transport of blades, according to claim one, **characterised in that** the lower part is supported on three correctly aligned and distanced support tables (7a, 7b, 7c) with support feet (11) that are telescopic and which have seven locking positions locked with an interlocking bolt (14).

6. Container for the transport of blades, according to claim five, **characterised in that** the support feet (11) are placed in the horizontal position, i.e. retracted, using the bolt (14) and lock pin.

7. Container for the transport of blades, according to claim five, **characterised in that** the support feet (11) are placed in the vertical position using a stay (12) which is fixed to the support foot (11) using a rotating stub and to the table (7) with the bolt (14) which fixes the support feet (11) in the horizontal position but by changing the bolt (14) hole.

8. Container for the transport of blades, according to claim one, **characterised in that** the walls of both sides of the container are joined together at the top using adjustable stays (5) with a screw ratchet (6) and using spacers (24) along the walls (20), in such a way that the stays (5) and the spacers (24) can be removed for loading and unloading the blades.

9. Container for the transport of blades, according to claim one, **characterised in that** the arrangement of the blades (21) is such that their transversal axis is arranged horizontally to the container base or slightly sloped in relation to the base and **in that** the blades contained inside cradles (22).

## Patentansprüche

1. Behälter für den Transport von Rotorblättern, der aus von Tragstreben gebildeten Seitenwänden besteht, wobei diese Bauteile einen rohrförmigen Aufbau und einen quadratischen Querschnitt aufweisen, mit Behälter-Auflageplatten (7), die für die Lagerung und den späteren Transport von Rotorblättern im unteren Teil installiert sind, wobei in die genannten Auflageplatten (7) Stützfüße integriert sind, und wobei die beiden Seitenwände unter Verwendung von verstellbaren Streben verbunden sind, **dadurch gekennzeichnet, dass** der Behälter aus Seitenwänden (20), einem oberen und einem unteren Teil besteht und dass die Tragstreben (1) einer selben Seitenwand unter Verwendung eines Bolzens (2) mit Sicherungsstift am unteren Ende und unter Verwendung einer Schraube (3) am oberen Ende miteinander verbunden sind, wobei sich die beiden miteinander verbundenen Tragstreben (1) in dem Bolzen (2), der am unteren Ende zusammenhält, drehen können und am oberen Ende auseinander bewegt werden, so dass die Dicke von einigen, zwischen den zu verbindenden Tragstreben angeordneten Abstandshaltern (4), verändert werden kann.

2. Behälter für den Transport von Rotorblätter nach Anspruch 1, **dadurch gekennzeichnet, dass** die Auflageplatten (7), die als Abstützung dienen und unten im Behälter installiert sind, integrierte einklappbare Stützfüße (11) aufweisen, die auch ausziehbar sind und als Führung für den Zusammenbau der Seitenwände dienen.

3. Behälter für den Transport von Rotorblättern nach Anspruch 1, **dadurch gekennzeichnet, dass** die Auflageplatten (7) unter Verwendung von Stutzen mit dem Behälter verbunden sind, die in Bohrungen in der entsprechenden Wand passen und mit einem Bolzen und Sicherungsstift oder Sperrbolzen (14) verriegelt sind.

4. Behälter für den Transport von Rotorblättern nach Anspruch 1, **dadurch gekennzeichnet, dass** die Behälter am vorderen und am hinteren Ende durch eine frontseitige Abdeckung (13) mit den erforderlichen Befestigungspunkten für ein Blatt und einer weiteren rückseitigen Abdeckung (12) mit den erforderlichen Befestigungspunkten für zwei Blätter geschlossen sind, wobei beide Abdeckungen (12) und (13) mit den Wänden des Behälters (20) durch die gleiche Verbindungsart wie die Tragstreben (1) verbunden sind, nämlich einen Bolzens (2) und eine Schraube (3).

5. Behälter für den Transport von Rotorblättern nach Anspruch 1, **dadurch gekennzeichnet, dass** sich der untere Teil auf drei Auflageplatten (7a, 7b, 7c) mit der korrekten Ausrichtung und dem korrekten Abstand abstützt, mit Stützfüßen (11), die ausziehbar sind und sieben Einrastpositionen aufweisen, die mit einem Sperrbolzen (14) verriegelt werden.

6. Behälter für den Transport von Rotorblättern nach Anspruch 5, **dadurch gekennzeichnet, dass** die Stützfüße (11) unter Verwendung des Bolzens (14) und des Sicherungsstiftes in der horizontalen Position, d. h. eingeklappt, platziert werden.

7. Behälter für den Transport von Rotorblättern nach Anspruch 5, **dadurch gekennzeichnet, dass** die Stützfüße (11) unter Verwendung einer Strebe (12) in der vertikalen Position platziert werden, wobei die Strebe unter Verwendung eines Drehstutzens mit dem Stützfuß (11) und durch den Bolzen (14) mit der Auflageplatte (7) verbunden ist, der die Stützfüße in der horizontalen Position fixiert, jedoch durch Wechseln der Bohrung des Bolzens (14).

8. Behälter für den Transport von Rotörblättern nach Anspruch 1, **dadurch gekennzeichnet, dass** die Wände auf beiden Seiten des Behälters am oberen Ende unter Verwendung von verstellbaren Streben (5) mit einer Schraubenratsche (6) und unter Verwendung von Abstandselementen (24) längs den Wänden (20) derart verbunden werden, dass die Streben (5) und die Abstandselemente (24) zum Be- und Entladen der Rotorblätter herausgenommen werden können.

9. Behälter für den Transport von Rotorblättern nach Anspruch 1, **dadurch gekennzeichnet, dass** die Anordnung der Rotorblätter (21) derart erfolgt, dass ihre Querachse horizontal zum Behälterboden oder leicht geneigt in Bezug auf den Boden verläuft und dass die Blätter in Traggestellen (22) aufgenommen sind.

## Revendications

1. Conteneur pour le transport de pales constitué par des parois latérales formées de cintres dont les éléments possèdent une structure tubulaire et des sections carrées, ledit conteneur étant pourvu dans sa partie inférieure de tables d'appui (7) destinées au stockage et au transport ultérieur des pales, ces tables d'appui (7) incorporant des pieds d'appui et assurant le couplage des deux parois latérales à l'aide d'étais ajustables, **caractérisé en ce que** le conteneur est constitué par des parois latérales (20), une partie supérieure et une partie inférieure, et **en ce que** les cintres (1) d'une même paroi sont assemblés entre eux par un boulon (2) à goupille de sécurité dans la partie inférieure et par une vis (3) dans la partie supérieure, les deux cintres couplés (1) étant capables de tourner le boulon (2) de façon à être assemblés dans la partie inférieure et séparés dans la partie supérieure, ce qui permet de faire varier l'épaisseur d'écartements (4) situés entre les cintres à coupler.

2. Conteneur pour le transport de pales tel que défini à la revendication 1, **caractérisé en ce que** les tables (7) qui servent d'appui et sont installées dans la partie inférieure du conteneur incorporent des pieds d'appui escamotables (11) qui sont également télescopiques et servent de guide à l'assemblage des parois latérales.

3. Conteneur pour le transport de pales tel que défini à la revendication 1, **caractérisé en ce que** les tables (7) sont couplées au conteneur à l'aide de fiches qui s'insèrent dans des orifices de la paroi correspondante et qui sont verrouillées par un boulon et une goupille de sécurité ou un boulon de verrouillage (14).

4. Conteneur pour le transport de pales tel que défini à la revendication 1, **caractérisé en ce que** les conteneurs sont fermés devant et derrière par un couvercle avant (13) possédant les points d'ancrage nécessaires pour une pale et un autre couvercle arrière (12) possédant les points d'ancrage nécessaires pour deux pales, les deux couvercles (12) et (13) étant couplés aux parois du conteneur (20) en employant le même type de couplage que les cintres (1), un boulon (2) et une vis (3).

5. Conteneur pour le transport de pales tel que défini à la revendication 1, **caractérisé en ce que** la partie inférieure repose sur trois tables d'appui (7a, 7b, 7c) correctement alignées et séparées, pourvues de pieds d'appui (11) télescopiques à sept positions de blocage grâce à un boulon de verrouillage (14).

6. Conteneur pour le transport de pales tel que défini à la revendication 5, **caractérisé en ce que** les pieds d'appui (11) sont placés en position horizontale, c.-à-d. escamotés à l'aide du boulon (14) et de la goupille de sécurité.

7. Conteneur pour le transport de pales tel que défini à la revendication 5, **caractérisé en ce que** les pieds d'appui (11) sont placés en position verticale à l'aide d'un étai (12) fixé au pied d'appui (11) par une fiche rotative et à la table (7) par le boulon (14) qui fixe les pieds d'appui (11) en position horizontale mais en changeant l'orifice du boulon (14).

8. Conteneur pour le transport de pales tel que défini à la revendication 1, **caractérisé en ce que** les parois des deux côtés du conteneur s'assemblent en leur sommet à l'aide d'étais ajustables (5) par un vissage à cliquet (6) et à l'aide d'écartements (24) le long des parois (20) de telle sorte que les étais (5) et les écartements (24) puissent être retirés pour charger et décharger les pales.

9. Conteneur pour le transport de pales tel que défini à la revendication 1, **caractérisé en ce que** les pales (21) sont disposées de telle sorte que leur axe transversal est placé à l'horizontale ou légèrement en pente par rapport à la base du conteneur et que les pales sont contenues dans des nacelles (22).
